(19) Europäisches Patentamt
European Patent Office
Office européen des brevets

(11) **EP 1 449 948 B1**

(12) **EUROPEAN PATENT SPECIFICATION**

(45) Date of publication and mention
of the grant of the patent:
**04.12.2013 Bulletin 2013/49**

(21) Application number: **01976733.4**

(22) Date of filing: **18.10.2001**

(51) Int Cl.:
*D04H 1/74* $^{(2006.01)}$        *H01M 4/64* $^{(2006.01)}$
*H01M 6/10* $^{(2006.01)}$        *H01M 6/16* $^{(2006.01)}$
*D04H 1/46* $^{(2012.01)}$        *D04H 1/4242* $^{(2012.01)}$
*D04H 1/498* $^{(2012.01)}$        *H01M 10/39* $^{(2006.01)}$
*H01M 4/66* $^{(2006.01)}$

(86) International application number:
**PCT/JP2001/009142**

(87) International publication number:
**WO 2003/035956 (01.05.2003 Gazette 2003/18)**

(54) **CARBON FIBER NONWOVEN BAND-SHAPED ARTICLE AND ITS MANUFACTURE METHOD**

CARBONFASERVLIESBAND-FORMKÖRPER UND VERFAHREN ZU SEINER HERSTELLUNG

ARTICLE NON-TISSE EN FIBRE DE CARBONE SE PRESENTANT SOUS LA FORME D'UNE BANDE ET SON PROCEDE DE REALISATION

(84) Designated Contracting States:
**DE GB**

(43) Date of publication of application:
**25.08.2004 Bulletin 2004/35**

(73) Proprietor: **MITSUBISHI RAYON CO., LTD.**
**Tokyo 108-8506 (JP)**

(72) Inventors:
• **SAMEJIMA, Tadao;**
**Products Development Laboratories**
**Nagoya-shi, Aichi 461-8677 (JP)**

• **SEKI, Susumu;**
**Products Development Laboratories**
**Nagoya-shi, Aichi 461-8677 (JP)**

(74) Representative: **HOFFMANN EITLE**
**Patent- und Rechtsanwälte**
**Arabellastrasse 4**
**81925 München (DE)**

(56) References cited:
EP-A1- 0 139 014     GB-A- 1 136 806
JP-A- 8 064 236     JP-A- 59 078 461
JP-A- 62 191 555     JP-B1- 43 004 993

EP 1 449 948 B1

**Description**

Technical Field

The present invention relates to a sodium-sulfur cell electrode material using a carbon fiber nonwoven band-shaped article having high qualities as electrode materials for a sodium-sulfur cell.

Background Art

A difference in availability factor between day and night is still increased in spite of an increase in the cost required for the construction of electric power plants in recent years and this more increases generating cost. For this, development in batteries, especially, highly efficient sodium-sulfur cells, that store surplus power obtained by night power generation in order to use the power when power demand is increased by day, is proceeding.

Sodium-sulfur cells are constituted of a cathode in which molten sodium is filled in an alumina electrolyte tube that passes a sodium ion selectively and an anode provided with a carbon fiber electrode material carrying molten sulfur in an anode chamber which is formed between the electrolyte tube and the wall of an anode container and has a circular section. The energy efficiency of this cell is increased with an increase in conductivity in the direction of the radius from the center of the anode chamber.

In the development of the sodium-sulfur cell, various studies have been made as to the electrode material carrying molten sulfur. For example, an electrode material is disclosed in Japanese Patent Laid-Open Publication No. 6-150938, the electrode material being manufactured by punching a carbon fiber nonwoven fabric, in which a carbon fiber is oriented at random with respect to the plane, into a cyclic form and by fitting this cyclic carbon fiber nonwoven fabric into the outer periphery of an alumina electrolyte tube. This cyclic electrode material, in which the degree of orientation of the carbon fiber in the direction of the radius from the center thereof is relatively high, exhibits good conductivity in the direction of the radius from the center of the anode chamber and is therefore superior in characteristics as a sulfur-carrying electrode material. However, since the carbon fiber nonwoven fabric is punched into a cyclic form, there is the problem that the residue of the nonwoven fabric left non-punched is close to 50%, it is necessary to laminate many cyclic carbon fiber nonwoven fabrics in the direction of the axis of the alumina electrolyte tube to fill these nonwoven fabrics and the production cost of the electrode material therefore becomes very high.

Also, an electrode material is disclosed in Japanese Patent Laid-Open Publication No. 8-64236, the electrode material being manufactured by winding a nonwoven fabric around an alumina electrolyte tube, the nonwoven fabric having the structure in which a laminate web of the carbon fiber oriented at random with respect to the plane is subjected to high density needle punch treatment to make the carbon fiber to be oriented in the direction of the thickness of the nonwoven fabric. This electrode material can be considerably increased in the degree of orientation of the carbon fiber in the direction of the radius from the center of an anode chamber. However, the bulk density of the carbon fiber becomes too high, so that wrinkles in a horizontal direction arise when the carbon fiber is wound around the outside of the electrolyte tube and the wrinkles are a cause of a drop in energy efficiency as an electrode material. Also, the high density needle punch treatment requires a treating cost which leads to an increase in the production cost of the electrode material and is also a cause of deteriorated performance because this needle punch treatment gives rise to breakdown and powdering of the carbon fiber.

Further, an electrode is disclosed in Japanese Patent Laid-Open Publication No. 11-26014 to develop a sulfur-carrying electrode material at a low cost, the electrode material having the structure in which a block primary aggregate obtained by intertwining plural carbon fiber filaments, or a pellet obtained by mixing carbon fiber with sulfur to mold into a pellet form and by cutting the end parts to make the molded product into a shape close to a sphere is filled in an anode chamber. However, in this electrode material, the dispersion of the packing density of the carbon fiber filled in the anode chamber becomes large and also the degree of orientation of the carbon fiber in the direction of the radius from the center of the anode chamber becomes low.

British Patent Laid-Open Publication GB 1136806 relates to a process for making fibrous sheet products having two major faces that are generally defined by fiber ends. The continuous production process comprises the steps of: (a) forwarding along its longitudinal dimension an elongated, porous batt of fibers having fiber alignment predominantly in a direction transverse to the direction of batt travel and in the plane of the batt, (b) severing said batt along one or more planes normal to the direction of fiber alignment and compressing the batt in a direction normal to the plane of the batt, to form parallel fibrous strips, (c) rotating the strips substantially 90° about their longitudinal axes while under compression and, (d) allowing the strips to contact each other. The production process is said to be well suited to the provision of pile layers of a great number of textile applications.

Disclosure of Invention

Accordingly, it is an object of the present invention to provide a sodium-sulfur cell electrode material using a carbon fiber nonwoven band-shaped article having the characteristics that when the article is used as a sulfur-carrying electrode material of a sodium-sulfur cell, the degree of orientation of the carbon fiber in the direction of the radius from the center of an anode chamber is high and no wrinkle which drops energy efficiency as an electrode material arises when filling the carbon fiber in  the anode chamber.

The sodium-sulfur cell electrode material which uses the above band-shaped article and is superior in conductivity in the direction of the radius from the center of an anode chamber.

In order to achieve the above object, the present invention provides a carbon fiber nonwoven band-shaped article being obtained by cutting a needle punch nonwoven fabric of carbon fiber, being characterized in that the carbon fiber is primarily oriented in a direction substantially perpendicular to the cut face of the band-shaped article.

The carbon fiber nonwoven band-shaped article, is obtained by needle-punching a laminate web in which staples of fire-resistant fibers are oriented in substantially one direction, carbonizing the obtained nonwoven fabric by sintering and then cutting the carbonized nonwoven fabric in a direction substantially perpendicular to the direction of the orientation of the staples.

According to the primary structure of the  present invention, there is provided a sodium-sulfur cell electrode material comprising laminating the above carbon fiber nonwoven band-shaped article like a spiral cylinder such that the cut face thereof constitutes the peripheral wall surface.

Best Mode for Carrying Out the Invention

A carbon fiber used in the present invention may include those obtained by sintering fire-resistant fiber, prepared by making acrylonitrile type fibers, cellulose type fibers, polyvinyl alcohol type fibers, phenol type fibers, pitch type fibers or the like resistant to fire, in an inert atmosphere. Among these fibers, acrylonitrile type carbon fibers are rich in strength and elasticity and are therefore particularly preferable.

The carbon fiber nonwoven band-shaped article used in the present invention must have the structure in which a carbon fiber is primarily oriented in a direction substantially perpendicular to the cut face of the band-shaped article. When the carbon fiber is oriented like this, the carbon fiber can be oriented to a high degree in the direction of the radius from the center of an anode chamber in the case where the band-shaped article is filled by laminating it like a spiral cylinder such that the cut face thereof constitutes the peripheral wall surface for use as a sulfur-carrying  electrode of a sodium-sulfur cell, to thereby make the electrode have high energy efficiency.

The carbon fiber nonwoven band-shaped article used in the present invention preferably has a bulk density of 0.08 to 0.15 $g/cm^3$ from the viewpoint of maintaining good handling characteristics, carrying out forced filling efficiently in the anode chamber and maintaining the state of the electrode material disposed in the anode chamber. Also, the carbon fiber nonwoven band-shaped article used in the present invention preferably has a width (cut width) of 5 to 50 mm, a thickness of 3 to 30 mm and a length of 200 mm or more from the viewpoint of, for example, the ability to fill the article in the anode chamber, prevention of the occurrence of wrinkles and efficiency of intertwining between fibers by needle punch treatment.

As to the length of the carbon fiber nonwoven band-shaped article used in the present invention, it is desirable in view of operability that the length of only one article thereof be enough for the length required to form the electrode material by laminating the band-shaped article into a spiral cylinder form without adding another article. However, it is possible to use short band-shaped articles by attaching one article to another.

The carbon fiber nonwoven band-shaped article used in the invention can be obtained by needle-punching a laminate web  in which staples of fire-resistant fibers are oriented in substantially one direction, carbonizing the obtained nonwoven fabric (the thickness is preferably made to be 3 to 30 mm) by sintering and then cutting the carbonized nonwoven fabric in a direction substantially perpendicular to the direction of the orientation of the staples and preferably cutting into a slender form 5 to 50 mm in width.

The laminate web in which stables of the fire-resistant fiber are oriented in substantially one direction may be formed by various methods including a method in which a web obtained by carding staples using a carding machine to orient these staples in one direction is fed so as to fold up the web in the same direction as the running direction of a conveyer, or in a direction perpendicular thereto and to laminate, a method in which plural carding machines are arranged in series and plural fed webs are laminated on a conveyer and a method in which a web fed from a carding machine is fed so as to fold up the web on a fixed table.

It is necessary to carry out the needle punch treatment to the extent that the webs constituting the nonwoven fabric are not layer-peeled. The treating density is preferably 50 to 1000 $punches/cm^2$ and more preferably, 100 to 500 $punches/cm^2$.

Examples of the present invention will be explained hereinbelow. The measurements of volume resistivity in the examples and comparative examples were made according to the following method.

1) A carbon fiber nonwoven fabric is cut into a rectangular form of about 30 mm x 30 mm.
2) Each dimension of the length (l), the width (w) and the thickness (t) of the nonwoven fabric are measured with an accuracy of 0.1 mm unit by using a constant pressure calipers.
3) The cut carbon fiber nonwoven fabric is sandwiched between 50-mm-diameter and 10-mm-thick copper plates and then compressed to 1/2 of the original thickness to measure the resistance ($R\Omega$) between electrodes by using an ohmmeter.

$$\text{Volume resistivity } (\Omega \cdot cm) = R \cdot l \times w/t \times 10$$

Example

A precursor containing 96 mol% of acrylonitrile and 2 mol% of methacrylic acid and 2 mol% of methylacrylate as copolymer components and having a single yarn fineness of 2.2 dtex was heat-treated at 230 to 280°C in an air atmosphere to obtain a fire-resistant fiber having a density of 1.40 g/cm$^3$. The fiber was crimped by a known method into staples having a cut length of 76 mm. A web obtained by carding the staples to orient in one direction was fed on a belt of an apparatus of manufacturing a nonwoven fabric such that the fiber was oriented in the direction of the width of the belt to form a laminate web having a METSUKE of 250 g/m$^2$. 16 laminate webs were laminated separately in five stages and needle-punched at a ratio of 400 punches/cm$^2$ in total on the surface and backface to form a fire-resistant fiber nonwoven fabric. Next, this nonwoven fabric was pre-sintered at a temperature of 300 to 800°C in a nitrogen atmosphere, then subjected to continuous carbonizing treatment at 2000°C for 10 minutes in a nitrogen gas atmosphere and wound around a roll to obtain a long-size having a thickness of 20 mm and a bulk density of 0.11 g/cm$^3$. The resulting carbon fiber nonwoven fabric was cut along the direction of the length of the nonwoven fabric into a width of 20 mm by using a band saw to obtain a carbon fiber nonwoven band-shaped article 5 m in length.

(Filling of carbon fiber nonwoven band-shaped article in anode chamber of sodium-sulfur cell)

An electrolyte tube made of alumina and having a length of 45 cm and an outside diameter of 60 mm was set concentrically to the inside of a cylindrical anode container having a length of 50 cm and an inside diameter of 80 mm. The above fiber nonwoven fabric was filled in advance in the bottom of the anode container. Next, the carbon fiber nonwoven band-shaped article of the invention was spirally laminated and forced in the cyclic anode chamber between the cylindrical anode container and the alumina electrolyte tube with applying moderate tension such that the cut face constituted the peripheral surface to wind the article around the alumina electrolyte tube. At this time, the band-shaped article was pushed down repeatedly every turn towards the bottom, which made it possible to fill the band-shaped article in the condition that irregular wrinkles on the inside of the cylindrical material formed of the band-shaped article and on the upper and lower surfaces thereof were substantially offset. The sodium-sulfur cell electrode material (filled band-shaped article) was taken out once to measure the volume resistivity of the sodium-sulfur cell electrode material in the direction of the width (direction of the radius of the cylindrical material) of the sodium-sulfur cell electrode material to find that the volume resistivity was 0.098 $\Omega \cdot$cm.

Comparative Example

The carbon fiber nonwoven band-shaped article obtained in Example was filled in the same procedures as in Example such that the surface (needle punch plane) of the nonwoven fabric constituted the wall surface of a cylindrical material. As a result, the band-shaped article could be easily filled. The sodium-sulfur cell electrode material (filled band-shaped article) was taken out once to measure the volume resistivity of the sodium-sulfur cell electrode material in the direction of the thickness thereof (direction of the radius of the cylindrical material), to find that the volume resistivity was 0.457 $\Omega \cdot$cm.

The carbon fiber nonwoven band-shaped article used in the present invention has the structure in which the carbon fiber is primarily oriented in a direction substantially perpendicular to the cut face of the band-shaped article. If the band-shaped article is laminated and filled in the form of a spiral cylinder in an anode chamber of a sodium-sulfur cell such that the cut face thereof constitutes the peripheral wall surface, carbon fiber constituting an electrode material can be oriented to a high degree in the direction of the radius from the center of the anode chamber to thereby make the electrode have high energy efficiency. Furthermore, an electrode material can be formed very efficiently without forming troublesome wrinkles and voids only by laminating and filing the band-shaped article in the form of a spiral cylinder. Moreover, since the electrode material can be manufactured by cutting the carbon fiber nonwoven fabric in a direction perpendicular to the direction of the orientation of the carbon fiber, all the carbon fiber nonwoven fabric except for the lug part can be utilized and it is therefore possible to decrease the production cost more greatly than the method of punching ring-wise.

**Claims**

1. A sodium-sulfur cell electrode material being **characterized by** laminating a carbon fiber nonwoven band-shaped article like a spiral cylinder so that a cut surface thereof constitutes a peripheral wall surface, wherein the carbon fiber nonwoven band-shaped article is **characterized in that** the carbon fiber is primarily oriented in a direction substantially perpendicular to the cut face of the carbon fiber nonwoven band-shaped article and is obtained by cutting a needle punch nonwoven fabric of carbon fiber.

2. The sodium-sulfur cell electrode material according to claim 1, wherein the carbon fiber nonwoven band-shaped article has a bulk density of 0.08 to 0.15 g/cm$^3$.

3. The sodium-sulfur cell electrode material according to claims 1 or 2, wherein the carbon fiber nonwoven band-shaped article has a width of 5 to 50 mm, a thickness of 3 to 30 mm and a length of 200 mm or more.

**Patentansprüche**

1. Elektrodenmaterial für eine Natrium-Schwefelzelle, **gekennzeichnet durch** Laminieren eines bandförmigen Erzeugnisses aus Kohlenfaser-Vliesmaterial entsprechend einem spiralförmigen Zylinder, so dass eine Schnittfläche davon eine Umfangswandoberfläche bildet, worin das bandförmige Erzeugnis aus Kohlefaser-Vliesmaterial **dadurch** gekennzeichnet ist, dass die Kohlefaser primär in einer Richtung orientiert ist, die im wesentlichen senkrecht zur Schnittfläche des bandförmigen Erzeugnisses aus Kohlefaser-Vliesmaterial ist und **durch** Schneiden eines Nadelfilz-Vliesmaterials aus Kohlefaser erhalten wird.

2. Elektrodenmaterial für eine Natrium-Schwefelzelle gemäß Anspruch 1, worin das bandförmige Erzeugnis aus Kohlefaser-Vliesmaterial eine Bulk-Dichte von 0,08 bis 0,15 g/cm$^3$ hat.

3. Elektrodenmaterial für eine Natrium-Schwefelzelle gemäß Anspruch 1 oder 2, worin das bandförmige Erzeugnis aus Kohlefaser-Vliesmaterial eine Breite von 5 bis 50 mm, eine Dicke von 3 bis 30 mm und eine Länge von 200 mm oder mehr hat.

**Revendications**

1. Matériau d'électrode de batterie sodium-soufre qui est **caractérisé par** le fait de stratifier un article non tissé en fibre de carbone en forme de bande sous forme d'un cylindre en spirale de sorte que sa surface de coupe constitue une surface de paroi périphérique, dans lequel l'article non tissé en fibre de carbone en forme de bande est **caractérisé en ce que** la fibre de carbone est orientée principalement dans une direction essentiellement perpendiculaire à la face de coupe de l'article non tissé en fibre de carbone en forme de bande et est obtenue en découpant un tissu non-tissé aiguilleté en fibre de carbone.

2. Matériau d'électrode de batterie sodium-soufre selon la revendication 1, dans lequel l'article non tissé en fibre de carbone en forme de bande a une densité apparente allant de 0,08 à 0,15 g/cm$^3$.

3. Matériau d'électrode de batterie sodium-soufre selon la revendication 1 ou 2, dans lequel l'article non tissé en fibre de carbone en forme de bande a une largeur allant de 5 à 50 mm, une épaisseur allant de 3 à 30 mm et une longueur supérieure ou égale à 200 mm.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6150938 A
- JP 8064236 A
- JP 11026014 A
- GB 1136806 A